Europäisches Patentamt

European Patent Office

Office européen des brevets

(19)

(11) EP 0 809 146 A1

## (12) EUROPEAN PATENT APPLICATION

(43) Date of publication:
26.11.1997 Bulletin 1997/48

(51) Int Cl.⁶: G03C 1/705, G03B 17/24

(21) Application number: 97303527.2

(22) Date of filing: 23.05.1997

(84) Designated Contracting States:
DE FR GB

(30) Priority: 23.05.1996 JP 128311/96

(71) Applicant: Hewlett-Packard Company
Palo Alto, California 94304 (US)

(72) Inventor: Yamada, Norihide
Kokubunji-shi, Tokyo (JP)

(74) Representative: Powell, Stephen David et al
WILLIAMS, POWELL & ASSOCIATES
34 Tavistock Street
London WC2E 7PB (GB)

### (54) Photographic method and apparatus

(57) In a photography method for a phosphor film (220) that provides correction of the effects of spontaneous electron return in the phosphor film, a latent image (401) having an image area (403) and a calibration area (405) is formed in the phosphor film by exposing the phosphor film to light (202) from a subject to form the image area, and by simultaneously exposing the phosphor film to light of an energy that produces a known saturation level to form the calibration area. The latent image is reproduced by stimulating it to emit light, and generating a frame of image data (659) in response to the emitted light. The image data include a calibration data set (663) representing the light emitted by the calibration area, and an image data set (661) representing the light emitted by the image area. The image data are corrected using a calibration factor derived from the calibration data set to generate corrected image data that are corrected for spontaneous electron return. A camera (200) that captures images using a phosphor film comprises a camera body (250), and a phosphor film (220), a shutter (205) and a light source (240) mounted in the camera body. Light (202) admitted through the shutter forms an image area (403) of a latent image (401) on the film. The light source is mounted so that light therefrom falls on the film. The light source is operable simultaneously with the shutter to expose the phosphor film to light of an energy that produces a known saturation level in a calibration area (405) of the latent image.

FIG.3

EP 0 809 146 A1

## Description

This invention relates to a photographic method and apparatus and more particularly to a camera and a method for capturing images using a phosphor-based film, to a method of reproducing pictures from the captured images and to a camera and a calibration method for correcting image data reproduced from the latent image captured in a phosphor film.

Today, most still photographs are taken using a film coated with a light-sensitive emulsion that includes silver halides. Ught from a subject is focused on the emulsion. This light causes a photochemical reaction that captures an image of the subject in the film. A chemical development process is later used to reproduce a picture from the captured image stored in the film. Conventional films store captured images with a high resolution. In addition, cameras and films are easily obtained at low cost. The facilities required to reproduce pictures from images captured in conventional films are available everywhere. However, taking photographs this way takes time since, in most conventional photography, the picture reproduced from the captured image is not immediately available. Moreover, since chemical materials are involved in both making the film and reproducing pictures from the captured images, environmental pollution can be a problem. Furthermore, no part of the picture taking and picture reproducing process inherently generates digital image data representing the captured image. The picture reproduced from the captured image must be scanned to convert it to image data. Consequently, it is inconvenient to transmit conventional photographs through a network using a workstation or personal computer.

Electronic still cameras that use CCDs and memories provide a partial solution to some of the problems just described. An increasing number of such cameras are now being introduced into the market. Such cameras store and transmit the captured image as digital image data. The image data can easily be transferred through networks using workstations and personal computers. Generating pictures from the image data is simple and rapid. Furthermore, the reusable memory that stores the image data in the camera has the advantage of low maintenance cost. However, since the spatial resolution of the CCD determines spatial resolution of the captured image, still cameras that use conventional, low-cost CCDs of the type designed for video cameras do not offer a high spatial resolution. Cameras that offer a higher spatial resolution are very expensive. Not only are the CCDs for such cameras expensive, but also high-resolution CCDs generate a large amount of image data. A large amount of memory must be provided in the camera to store the image data. Otherwise, the number of images that the camera can capture before it has to upload the image data is severely limited. The image data can be compressed before it is stored to reduce the memory requirements, but the time required to compress the image data of each captured image may limit the rate at which images can be captured.

Phosphor films that use phosphors to store captured images offer a potential solution to the above-described problems of silver halide emulsion film and electronic still cameras. Such films temporarily store a captured image as a latent image. Since the latent image is relatively short lived, it must be later transferred to a more permanent storage medium. As part of the process of transferring the latent image to the more permanent storage medium the latent image can be converted to digital image data. This greatly simplifies the subsequent processing, storage and transmission of the captured images. A picture can be very quickly be generated from the digital image data. Moreover, phosphor films can be adapted for use in cameras similar to conventional cameras, which makes the camera inexpensive. Since the captured image is initially stored as a latent image in the phosphor film, and the phosphor film has a spatial resolution considerably greater than that of even high-resolution CCDs, the captured images can have a high spatial resolution. Moreover, successive images can be captured as quickly as the film advance mechanism in the camera can operate. Finally, since chemicals are only used to make phosphor films, and not to reproduce the captured images, and further since the phosphor films are re-useable, there is almost no concern about environmental pollution in connection with phosphor films.

Phosphor film is a film that captures images and reproduces corresponding latent image using the various electron energy states that can be created by doping certain semiconductors using pairs of suitable impurities. When the phosphor film is exposed to incident light from a subject, the energy of the incident light excites electrons from an impurity state to an excited state. The number of electrons elevated to the excited state is proportional to the energy of the incident light. The phosphor traps the electrons at energy levels close to the excited state. The trapped electrons constitute a latent image.

The latent image is reproduced by exposing the phosphor film to longer-wavelength light energy. This releases the electrons from their traps, whence they return to the impurity state. The electrons emit light as they return to the impurity state. The light energy emitted is proportional to the number of electrons returning to the impurity state. This basic latent image storage and reproduction mechanism is described in detail in European Patent Application 0712035 relating to *Improved Phosphor Film Composition for Use in Image Capture.*

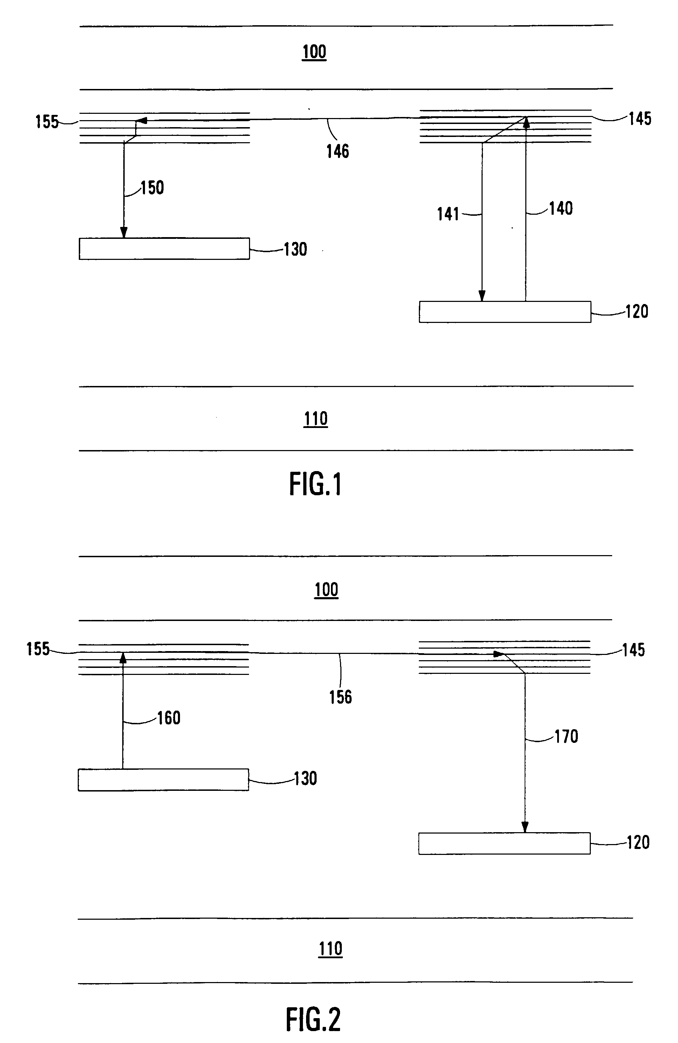

The basic latent image storage and reproduction mechanism will be described in more detail with reference to Figure 1, which shows the energy states of a phosphor that has been doped with two different impurities or dopants, namely, a color dopant and a trap dopant. Doping the phosphor creates additional energy states between the valance band and the conduction band. These energy states include the color dopant state, color dopant excited state, trap dopant state and trap dopant excited state.

The energy difference between the color dopant state and the color dopant excited state determines the wavelength of the light to which the phosphor is sensitive. Since each of the these energy states actually includes a number of energy states, the phosphor is sensitive to a band of wavelengths and not just to a single wavelength. An appropriate choice of the semiconductor material of the phosphor, and the color dopant enables the phosphor film to capture an image in response to light having wavelengths within a band of wavelengths in the visible range. Using three suitable color dopants provides the phosphor film with sensitivity in the blue, green, and red parts of the spectrum, which enables the phosphor film to capture full-color latent images.

The trap dopant should be selected to create energy states that are closer to the conduction band 100 than the color dopant states.

Some combinations of phosphors and color dopants, when incorporated in a phosphor film, will provide sensitivity to white light. Such a phosphor film can be used for black-and-white photography. An example of a phosphor film suitable for black-and-white photography has CaS as the phosphor, Eu as the color dopant, and Sm as the trap dopant.

The mechanism by which images are captured in a phosphor film and the mechanism by which the resulting latent images are reproduced will now be described with reference to Figures 1 and 2, respectively. Operation of the phosphor sensitive to light in one band of wavelengths will be described. In a color phosphor film, operation of the phosphors sensitive to light in the other two bands is similar and will not be described.

An image is captured in the phosphor film by exposing the phosphor film to incident light from a subject. Prior to exposure, nearly all of the electrons in the phosphor are in the color dopant state 120. The incident light excites electrons from the color dopant state to the color dopant excited state 145, as indicated by arrow 140. The electrons then move from the color dopant excited state 145 to the trap dopant excited state 155 as indicated by arrow 146. The trap dopant excited state is at a slightly lower energy level than the color dopant excited states. From the trap dopant excited state, the electrons then make the transition to the trap dopant state 130. Although some electrons do not enter the trap dopant state, but drop back to the color dopant state as indicated by the arrow 141, the number of electrons that become stored in the trap dopant state in each elemental area of the phosphor film is proportional to the energy of the incident light to which the elemental area of the phosphor film was exposed when the image was captured. The term *fixel* (film picture element) will from now on be used to indicate an elemental area of the phosphor film.

The latent image stored in the phosphor film is reproduced by illuminating the film with infra-red light. The infra-red light elevates the electrons trapped in the trap dopant state 130 into the trap dopant excited state 155, as indicated by the arrow 160 shown in Figure 2. These electrons move from the trap dopant excited state to the color dopant excited state 145, as indicated by arrow 156. The electrons then fall from the trap color dopant excited state to the color dopant state 120. When the electrons make this transition, they emit light having a wavelength that corresponds to the energy difference between the states. Since the excited color dopant state consists of multiple, dense and distributed states, there are multiple energy differences between the states. Therefore, the spectrum of the emitted light has some width. In a color phosphor film, the spectrum of the light emitted by each of the three phosphors has a different center wavelength. The energy of the light emitted by each fixel of the phosphor film in response to the infra-red illumination is proportional to the number of electrons trapped in the trap dopant state in the fixel. Since the number of electrons in the trap dopant state in the fixel is proportional to the light energy received by the fixel when the image was captured, the energy of the light emitted by the fixel is also proportional to the light received by the fixel. These proportional relationships mean that the captured image can be reproduced by reproducing the latent image.

The light emitted by the phosphor film in response to the infra-red illumination is detected by optical detectors such as CCDs. The optical detectors preferably generate digital image data representing the latent image. Preferably, the latent image is reproduced using a scanning technique that provides a substantially greater spatial resolution than that of the CCD used to detect the emitted light. Such a technique is described by Gregory M. Cutler in United States patent application serial no. 08/703,717 entitled *High-Speed Scanner for Reading Latent Images in Storage Phosphors*. This patent application is assigned to the assignee of the present application. After appropriate correction of the image data, the image data can be fed to a monitor display or a printer that will display a picture in response to the image data.

Although phosphor films offer solutions to many of the problems associated with conventional silver halide films and the problems associated with electronic still cameras, the intensity of the latent image that can be reproduced from a phosphor film gradually decreases with increasing time from when the image was captured. The intensity of the latent image decreases with time because some of the electrons trapped in the trap dopant states spontaneously return to the color dopant states, even though the phosphor film is not illuminated by infra-red light. This effect will be called spontaneous electron return. Because a number of electrons spontaneously return from the trap dopant state to the color dopant state before the latent image is illuminated with infra-red light to reproduce the latent image, the number of electrons stored in the trap dopant states decreases gradually with time.

The reduced number of electrons stored in the trap dopant states means that fewer electrons are available to return to the color dopant state, and to emit light in the process, when the film is finally illuminated with infra-red light to reproduce the latent image. If a long time has elapsed since the image was captured, the latent image can become so dark that it can no longer be precisely reproduced.

Furthermore, in a color phosphor film, the rate at which the electrons spontaneously return to the color dopant state is different for each of the color dopants. Consequently, the color balance of the latent image also changes with time as a result of spontaneous electron return.

It would be desirable to be overcome this disadvantage of phosphor film and to provide a way to compensate for the effects of spontaneous electrons return when the latent image is reproduced.

The invention provides a photography method for a phosphor film. In the method, a latent image is formed in the phosphor film by exposing the phosphor film to light from a subject to form an image area of the latent image, and simultaneously exposing the phosphor film to light of an energy that produces a known saturation level to form a calibration area of the latent image.

Unlike conventional latent images, the latent image formed as just described may be reproduced in a way that corrects for the effects of spontaneous electron return. The latent image is reproduced by illuminating the latent image with infra-red light to stimulate the latent image to emit light. A frame of image data is generated in response to the light emitted by the latent image. The frame of image data includes a calibration data set and an image data set. The calibration data set represents the light emitted by the calibration area. The image data set represents the light emitted by the image area. The image data set is then corrected using a calibration factor derived from the calibration data set to generate a frame of corrected image data. The frame of corrected image data is corrected for spontaneous electron return.

The invention also provides a method of reproducing a latent image stored in a phosphor film. The latent image includes an image area exposed to incident light from a subject, and a calibration area exposed to light of an energy that produces a known saturation level in the phosphor film. In the method, the latent image is stimulated to emit light. A frame of image data is generated in response to the light emitted by the latent image. The frame of image data includes a calibration data set and an image data set. The calibration data set represents the light emitted by the calibration area. The image data set represents the light emitted by the image area. The image data set is corrected using a calibration factor derived from the calibration data set to generate a frame of corrected image data. The frame of corrected image data is corrected for spontaneous electron return.

Finally, the invention provides a camera that captures images using a phosphor film. The camera comprises a camera body, and a shutter and a light source mounted in the camera body. The shutter is operable to admit light to the phosphor film, which forms an image area of a latent image. The light source is mounted in the camera body so that light from the light source falls on the phosphor film. The light source is operable simultaneously with the shutter to expose the phosphor film to light of an energy that produces a known saturation level in a calibration area of the latent image.

Figure 1 shows the energy levels in a phosphor film, and the energy level transitions that occur when an image is captured.

Figure 2 shows the energy levels in a phosphor film, and the energy level transitions that occur when the latent image stored in the film is reproduced.

Figure 3 shows the internal structure of an embodiment of a camera according to the invention.

Figure 4 shows a portion of the phosphor film including the preferred arrangement of the image area and the correction area of the latent image formed by the camera according to the invention.

Figure 5 is a schematic drawing of an example of a circuit that can be used to drive the light source in the camera according to the invention.

Figure 6 is a schematic drawing representing an arrangement that may be used to perform the method according to the invention for reproducing the latent image formed in a phosphor film by a camera according to the invention.

Figure 7 is a block diagram of the processing performed on the image data representing the latent image to correct the image data for the effect of spontaneous electron return.

To mitigate the effects of spontaneous electron return on the accuracy with which the image data generated in response to a latent image represent the original subject, when an image is captured on a phosphor film, the phosphor film is exposed not only to light from the subject, but is simultaneously exposed to light of an energy that produces a known level of saturation in a calibration area of the phosphor film. The calibration area is located to the image area of the phosphor film that is exposed to the light from the subject. The image area and the calibration area together form the latent image.

The saturation level produced by exposing an area of the phosphor film to light energy is the fraction of the electrons in the area that are raised to the trap dopant state by the exposure. If an area of the phosphor film is exposed to a high level of light energy so that substantially all the electrons in the area are raised to the trap dopant state by the exposure, this area is said to be fully saturated, and to have a saturation level of one, or 100%.

The light energy is preferably generated by a light source located in the camera. An optical arrangement inside the camera conducts the light from the light source to an area of the phosphor film next to the part of the phosphor film that is exposed to the light from the subject. Each time an image of a subject is captured, exposing the phosphor film to incident light from the subject, the phosphor film is additionally and simultaneously exposed to the light from the light source. This forms the latent image in the phosphor film. The latent image is composed of two areas, namely, the image area where the phosphor film was exposed to unknown intensities of light from the subject, and the calibration area where the phosphor film was exposed to the light from the light source. The energy of the light from the light source is that which produces a known saturation level in the calibration area of the phosphor film.

In a preferred embodiment, the light source is composed of three light-emitting devices (LEDs) that generate red, green and blue light of energies that produce known saturation levels of the red, green and blue phosphors, respectively, of the phosphor film. The light from each of these LEDs is focused on a different part of the calibration area to produce three calibration spots, one for each color. The calibration area is preferably located outside the image area.

When the phosphor film is later illuminated with infra-red light to reproduce the latent image, the light emitted by both the image area and the calibration area of the latent image is measured by light detectors, such as CCDs. The light emitted by the latent image is converted to digital image data. The digital image data includes calibration data representing the light emitted by the calibration area of the latent image.

Generally, at a time $t$ after an image has been captured, the fraction of the electrons that were originally raised to the trap dopant state by the exposure but which have subsequently spontaneously returned to the color dopant state is believed to be the same for all pixels of the latent image. Such elemental areas will be called *fixels* (film picture elements). Therefore, the following equation applies the calibration area and any fixel $i$ of the image area of the latent image:

$$E_P(t)/E_S(t)_i = E_P(O)/E_S(O)_i$$

where:

$E_P(O)$ is the intensity of the light that would be emitted by the calibration area in response to illumination by infra-red light if such illumination took place immediately after the image was captured. The value of $E_P(O)$ is known. This is because the saturation level of the calibration area is known, and the light energy that the calibration area exposed to this level of saturation will emit if it is illuminated with infrared light immediately following exposure is also known.

$E_P(t)$ is the intensity of the light that is actually emitted by the calibration area in response to illumination by the infra-red light when the latent image is reproduced at the elapsed time $t$ after the the image was captured. Because of spontaneous electron return, the value of $E_P(t)$ is a function of the elapsed time $t$.

$E_S(O)_i$ is the intensity of the light that would be emitted by the fixel $i$ in the image area in response to illumination by infra-red light if such illumination took place immediately after the image was captured.

$E_S(t)_i$ is the intensity of the light that is actually emitted by the fixel $i$ in the image area in response to illumination by infra-red light when the latent image is reproduced at the elapsed time $t$ after the image was captured. Because of spontaneous electron return, the value of $E_S(t)_i$ is also a function of the elapsed time $t$.

Therefore, since $E_P(O)$ is known, and $E_S(t)_i$ and $E_P(t)$ are measured when the latent image is reproduced, the value of $E_S(O)_i$ can easily be calculated for the fixel $i$ of the image area using the following equation:

$$E_S(O)_i = E_S(t)_i \times E_P(O)/E_P(t)$$

Consequently, by applying this equation to the image data representing the light emitted by each of the fixels of the latent image, image data representing the latent image as it was immediately after the image was captured can be automatically and precisely generated, even though the latent image is reproduced at the elapsed time $t$ after the image was captured.

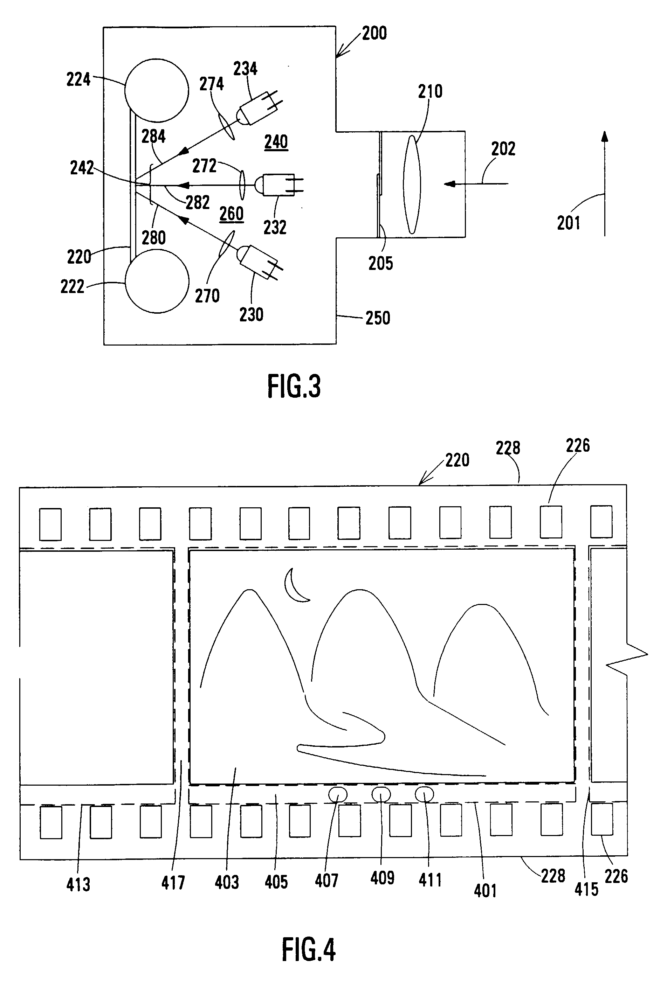

An embodiment of the camera 200 according to the invention is shown in Figure 3. The camera 200 can also be used to practice the photography method according to the invention. The camera is designed to take pictures by exposing the color phosphor film 220 to light. The camera includes the light-tight body 250 in which the lens 210 is mounted. As indicated by the arrow 202, light from the subject 201 is received by the lens, which forms an image of the subject on the phosphor film 220. The phosphor film 220 is preferably stored in the cartridge 222 that can be loaded into and unloaded from the camera body 250 in the same way as a cartridge of conventional silver halide color film. Also mounted in the body are the reel 224 and a film advance mechanism (not shown). The advance mechanism advances the phosphor film from the cartridge to the reel after each image is captured.

A main shutter 205 is located between the lens 210 and the phosphor film 220. A variable aperture (not shown) may additionally be located between the lens and the phosphor film. The main shutter prevents light from the subject from reaching the phosphor film except when an image is captured. The main shutter also controls the amount of light energy from the subject to which the phosphor film is exposed when the image is captured. If the camera includes a variable aperture, the variable aperture and the main shutter collectively control the amount of light energy to which the phosphor film is exposed.

Also mounted in the body 250 of the camera 200 is the light source 240 and the focusing optics 260. Light 242 from the light source is focused on the phosphor film 220 by the focusing optics and is of an energy that produces a known level of saturation in the phosphor film. In the preferred embodiment shown, the light source 240 is composed of three LEDs, each of which generates light of a different color. The LED 230 generates red light 280, the LED 232 generates green light 282, and the LED 234 generates blue light 284. The red light, the green light and the blue light are each of an energy that produces a known saturation in the phosphor film. Alternatively, a white light source, such as an incandescent bulb or a white LED, may be mounted in the body of the camera as the light source 240. The white light source may form a single, white calibration spot in the phosphor film. Alternatively, a three-way beam splitter and red-green and blue color filters may be interposed between the white light source and the phosphor film to form a separate calibration spot for each of the different colors.

As a further alternative, ambient light from outside the camera can serve as the light source 240. The ambient light is conducted into the camera body 250 by a suitable optical path such as an optical fibre (not shown). In this case, an auxiliary shutter (not shown) is mounted in the optical path to control the amount of light energy provided by the ambient light. The optical path may additionally include a three-way beam splitter, and red, green and blue color filters.

As a yet further alternative, if the camera includes a flash unit, light generated by the flash unit can serve as the light source 240. The light from the flash can be conducted into the camera body 250 by a suitable optical path such as an optical fibre (not shown). An auxiliary shutter (not shown) is mounted in the optical path to prevent ambient light from leaking into the camera body via the optical path. The optical path may additionally include a three-way beam splitter and red, green and blue color filters.

If the camera 200 is designed to operate only with black-and-white phosphor film, only one LED or other light source is required for the light source 240. If a white light source, ambient light or light from the flash is used as the light source 240 and the camera is designed to operate only with black and white phosphor film, the above-mentioned color filters are unnecessary. Finally, the light source 240 need generate light of only one color if the camera is designed to operate with color phosphor films in which the rate of spontaneous electron return is the same or similar for all three color phosphors.

The focusing optics 260 are disposed between the light source 240 and the phosphor film 220 to focus the light from the light source onto a specific calibration area of the phosphor film. The focusing optics define the extent of the calibration spot formed on the phosphor film by each LED. In the preferred embodiment, the converging lenses 270, 272 and 274 are located between the LEDs 230, 232 and 234, respectively, and the phosphor film 220. The lenses may be formed integrally with the LED to make mechanical assembly easier.

The focusing optics 260 may include one or more optical fibres (not shown) that conduct the light from the light source 240 to the phosphor film 220. If the ends of such optical fibres are mounted close to the phosphor film, the lenses may be omitted.

Figure 4 shows part of the phosphor film 220 in which the latent image 401 is formed. Referring to Figures 3 and 4, perforations 226 are located between each edge 228 of the film and the latent image. The latent image is composed of the image area 403 formed in response to light from the subject, and the calibration area 405 formed in response to the light from the light source 240. In the preferred embodiment shown, the three calibration spots 407, 409 and 411 are formed in the calibration area 405 by the light from the LEDs 230, 232 and 234, respectively. Also shown in Figure 4 are parts of adjacent latent images 413 and 415.

The calibration area 405 is located outside the image area 403 so that light from the subject does not change the saturation level produced in the calibration area by the light from the light source 240, and so that the calibration area can be excluded from the picture generated in response to the image data obtained by reproducing the latent image. The calibration area is small enough to be located in the margin that normally surrounds the image area 403. Consequently, the invention can be implemented with a minimal impact on the size of the latent image of the subject that can be stored in a phosphor film of a given size. Moreover, the calibration area can occupy less than the entire margin. Locating the calibration area in a portion of the margin is sufficient.

In the preferred embodiment example shown in Figure 4, the calibration area 405 is located between the bottom of the image area 403 and the adjacent set of sprocket holes 226, but can alternatively be located between the top of the image area and the adjacent sprocket holes. As a further alternative, the calibration area can be rotated through 90° and located in the part 417 of the margin between adjacent latent images. As a yet further alternative, if the phosphor coating covers the entire width of the film, the calibration area may be located between the sprocket holes and the edge 228 of the film, or calibration spots may be located between adjacent sprocket holes.

The latent image of the light source 240 is formed in the calibration area 405 of the phosphor film 220 by exposing the calibration area to the light from the light source at the same time as the main shutter 205 is opened to capture the image. In other words, the calibration area is exposed to the light from the light source 240 simultaneously with the main shutter 205 opening to expose the image area 403 to light from the subject. As an alternative to the phosphor film being exposed to light from the light source 240 and the subject 201, the two exposures may be performed sequentially, provided that the delay between them is small. For the purposes of this disclosure, exposures that occur with a small delay between them will still be regarded as simultaneous exposures. Any delay should be small compared with the time constant of the spontaneous electron return.

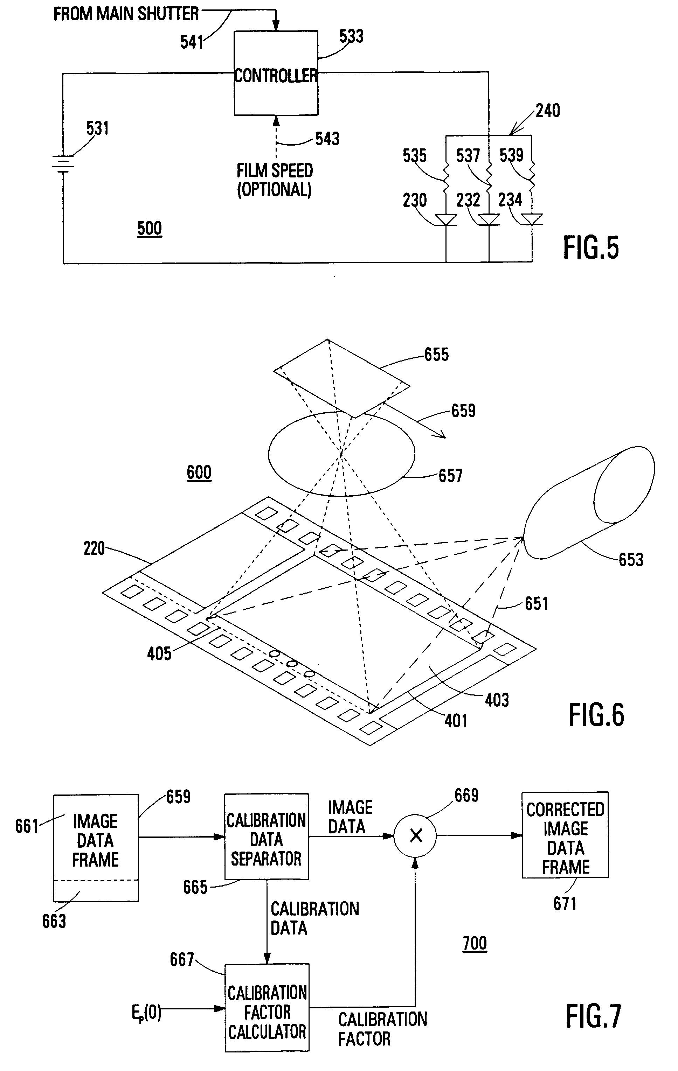

The camera body 250 additionally includes a circuit that controls the amount of light energy generated by the light source 240 to which the calibration area 405 is exposed. Figure 5 shows an example of the circuit 500 used in the embodiment of the camera shown in Figure 3. This circuit will now be described with reference to Figures 3, 4 and 5. In the embodiment of the camera 200 shown in Figure 3, the calibration area 405 is exposed to light generated by the light source 240 composed of the red, green and blue LEDs 230, 232 and 234. In the circuit 500, the battery 531 is connected in series with the controller 533 and the light source 240. In the example of the light source 240 shown, the LEDs 230, 232 and 234 are respectively connected in series with the resistors 535, 537 and 539. The three serial arrangements of an LED and a respective resistor are connected in parallel between the controller and the battery.

The battery 531 may be used exclusively by the circuit 500, or may be shared with other electrical elements of the camera 200, such as the film advance, flash, exposure control, etc. None of these elements is shown to simplify the drawings. The battery 531 typically has a voltage in the range of one to six volts.

The controller 533 is triggered by the electrical or mechanical input 541 from the main shutter release (not shown) operated by the user to trigger the main shutter 205. The main shutter controls exposure of the phosphor film 220 to the light received from the subject. The controller is normally in an OFF state, so that no current flows from the battery 531 to the light source 240.

In response to the user operating the shutter release, the controller turns ON for a predetermined time and applies a predetermined voltage to the light source 240. The voltage applied to the light source may be substantially equal to the voltage of the battery 531, or the controller may include a voltage regulator so that the voltage applied to the light source is the same, irrespective of whether the battery is new or partially discharged. The predetermined time for which the controller stays ON is typically in the range of 0.1 to 100 ms.

In the light source 240, the values of the resistors 535, 537 and 539 are chosen so that each of the respective LEDs 230, 232 and 234 emits a predetermined amount of light energy when the controller 533 applies a predetermined voltage to the light source for the predetermined time. The resistors compensate for the different forward voltage drops and current-to-light conversion efficiencies of the different-colored LEDs. The drive current applied to the LEDs typically lies in the range of 5-50 mA.

The amount of light energy emitted by each of the LEDs 230, 232 and 234 is sufficient to expose the respective calibration spot 407, 409 and 411 in the calibration area 405 of the latent image 401 to a predetermined saturation level. In the preferred embodiment, the light energy emitted by each LED is such that the respective calibration spot is exposed to a light energy greater than that which fully saturates the phosphor film 220. This light energy level that is greater than that required to elevate the electrons in the calibration spot from the color dopant state to the trap dopant state (see Figure 1).

Exposing the calibration spots 407, 409, and 411 in the calibration area 405 of the latent image 401 to light of an energy greater than that required to fully saturate the phosphor film 220 simplifies the design of the circuit 500, since the controller 533 can turn the light source 240 ON for a fixed time. Possibly more accurate calibration results may be obtained by exposing the calibration spots 407, 409 and 411 to a light of an energy less than that which fully saturates the phosphor film. This is because the area of each of the calibration spots remains substantially constant when the light to which the calibration area is exposed is of an energy less than that which fully saturates the film. If the calibration area is exposed to light energy greater than that which fully saturates the phosphor film, the area of the resulting calibration spot depends on the film speed. The area of the calibration spot varying with the film speed can lead to errors if the calibration is performed using the light emitted by the whole of the calibration spot.

Exposing the calibration spots 407, 409 and 411 to light of an energy less than that which fully saturates the phosphor film increases the complexity of the camera 250 because the light energy required to expose the calibration spot to a predetermined saturation level depends on the speed of the phosphor film. To take account of the film speed, the controller should receive the additional input 543 indicating the film speed. In response to the input 543, the controller will vary its ON time in inverse proportion to the film speed so that the saturation level of the calibration area is the same regardless of the speed of the film. Alternatively, the controller can turn the light source ON for a fixed time, and, in response to the film speed, vary the voltage that it applies to the light source 240.

In embodiments in which the light source 240 includes an auxiliary shutter (not shown), the auxiliary shutter is triggered by the shutter release (not shown) simultaneously with the main shutter 205. The auxiliary shutter includes a mechanical or electronic timer that controls the time that the auxiliary shutter remains open. The auxiliary shutter may remain open for a time that is long enough to ensure that the light received is of an energy that fully saturates the calibration area 405 of the phosphor film. Alternatively, the light energy received via the auxiliary shutter may be metered, and the time for which the auxiliary shutter remains open may be controlled, so that the light to which the calibration area of the film is exposed is of an energy that fully saturates the film, or is of an energy that exposes the film to a predetermined saturation level, less than full saturation.

To reproduce the latent image stored in the phosphor film 220, the phosphor film is removed from the camera 250 in a dark room or other light-proof enclosure, and is illuminated with infra-red light. Figure 6 is a schematic view of a reproducing arrangement 600 that reproduces the latent image 401 stored in the phosphor film 220. The latent image is illuminated with infra-red light 651 from the light source 653. In response to the infra-red light, each fixel in both the image area 403 and the calibration area 405 emits light of an energy proportional to the light energy to which the fixel was exposed when the image was captured. If the phosphor film is a color film, the light emitted will be of different colors representing the colors of the light received from the subject.

The lens 657 focuses the light emitted by the latent image 401 on the image sensor 655. The image sensor may be a CCD, a photodiode, or some other suitable light sensor, and preferably includes an analog-to-digital converter so that digital image data are generated. In the example shown, light from the whole of the latent image is focused on the image sensor. This requires the light sensor 655 to have a very large number of pixels to provide an acceptable spatial resolution. A high spatial resolution can be obtained using a simpler light sensor, such as a CCD with a few thousand pixels, or a photodiode by scanning the latent image. A high speed scanner for scanning a latent image is described in United States patent application serial no. 08/703,717. Scanning the latent image offers various trade-offs between cost, spatial resolution and the time required to scan the latent image. Regardless of whether and how the latent image is scanned, the image sensor 655 generates a frame of digital image data 659 in response to the light emitted by each latent image in response to illumination by infra-red light.

The format of the frame of digital image data 659 generated by the reproducing arrangement shown in Figure 6, and the way the image data are processed, are illustrated schematically in Figure 7. An example of a processor 700 that processes the digital image data frame obtained from a the latent image 401 to yield a corrected image data frame will now be described with reference to Figures 6 and 7. The digital image data frame 659 generated by the reproducing arrangement shown in Figure 6 includes two data sets, the image data set 661 composed of image data for the fixels of the image area 403 of the latent image 401, and the calibration data set 663.

The image data set 661 typically includes three color data subsets, one for each color. The calibration data set 663 includes at least one data value for each calibration spot, such as the calibration spots 407, 409 and 411. Since each calibration spot typically includes many fixels, the calibration data set will typically include multiple data for each calibration spot. Moreover, if the calibration area includes a calibration spot for each color, as shown in Figure 4, or a white calibration spot, the calibration data will include three color calibration data subsets, one for each color.

The digital image data frame 659 received from the image sensor 655 is processed by the calibration data separator 665 to separate the calibration data set from the image data set. This unit separates any image data generated by the image sensor in response to the calibration area 405 of the latent image and forwards such image data as the calibration data set 663 to the calibration factor calculator 667. The calibration data separator forwards the remainder of the image data, i.e., the image data subset, to the multiplier 669.

The calibration factor calculator 667 extracts the data for each calibration spot from the calibration data set. The calibration factor calculator processes the data for each calibration spot using such processing as averaging, integration, data selection or similar operations to generate a single light output value $E_P(t)$ for the calibration spot. The light output value represents the energy of the light emitted by the calibration spot in response to the infra-red illumination. If there are multiple calibration spots in the calibration area, a light output value $E_P(t)$ is generated for each calibration spot.

The calibration factor calculator 667 then calculates the calibration factor $E_P(O)/E_P(t)$ for each calibration spot by dividing the known initial light output value $E_P(O)$ for the calibration spot by the light output value $E_P(t)$ for the calibration spot. Each of the calibration factors corresponds to one color.

The initial light output value $E_P(O)$ used by the calibration factor calculator may be a standard value stored in the calibration factor calculator. Alternatively, the camera 250 (Figure 3) may include additional light sources that write spots in the calibration area to represent the initial light output value as a binary code, for example. This binary code would be included in the calibration data subset, and could be extracted by the arrangement illustrated in Figure 7 to indicate the initial light output value $E_P(O)$ of each calibration spot. This initial light output value would then be used by the calibration factor calculator to calculate the calibration factor.

Coding the initial light output value in the calibration area of the latent image would enable the processing arrangement illustrated in Figure 7 to read and correct the latent images formed on different types of film using different types of cameras. For example, with such coding in the calibration area 405, the processing arrangement could read and correct the latent images formed both by cameras that form fully saturated calibration spots and by cameras that form calibration spots having a known saturation level below full saturation.

The calibration factor calculator 667 passes the calibration factor for each calibration spot to the multiplier 669. The multiplier multiplies each of the image data $E_S$ $(t)_i$ in the color data subset for each color by the calibration factor for the color. This way, each of the image data for the latent image is corrected for the effect of spontaneous electron return. Multiplying each of the image data by the appropriate calibration factor restores the data value to the original data value $E_S(O)_i$ that would have been obtained if the latent image had been reproduced immediately after the image was captured.

The multiplier 669 generates the corrected image data frame 671 for the latent image. The corrected image data frame is smaller than the image data frame because it lacks the calibration data. Thus, a picture generated in response to the corrected image data lacks the calibration areas shown in Figure 4.

Using calibration spots of three different colors, for example, red, green and blue, or using a single, white calibration spot enables the system according to the invention to correct for any differences in the spontaneous electron return rates of the red-, green- and blue-sensitive phosphors. Each color can be automatically corrected, and the color pictures generated in response to the corrected image data can be precise representations of the original subject. Although the embodiment of the camera 250 described above includes red. green and blue LEDs that form red, green and blue calibration spots. the light source 240 can form calibration spots of other colors, such as red and yellow. Moreover, in a camera adapted for black-and-white phosphor film, the light source can form a single calibration spot at a color that most appropriately represents the phosphor film's spectral response.

As a further variation, the light source 240 can form plural calibration spots of each color in the calibration area 405 such that calibration spots of the same color have known, different intensities. The calibration data subset generated in response to such calibration spots enables a grey scale correction to be applied to the image data.

As noted above, more calibration spots than the minimum number required to correct for spontaneous electron return can be formed in the calibration area 405 to enable additional data to be recorded in the calibration area of each latent image 401. For example, such information such as date and exposure status can be represented. This information can be extracted from the calibration data subset when the latent image is reproduced. Such information can be used to perform additional automatic processing of the image data.

The information extracted from the calibration data subset can also optionally be superimposed on the image data in the corrected image data frame to enable the data to be displayed as part of the picture generated in response to the corrected image data frame. Since the information is not part of the image data, it can be displayed in any location in the picture according to the wishes of the user. Since the image data are digital data, image processing, such as image processing to get rid of imperfections caused by dust on the lens, can easily be performed.

The camera can record such additional information in the calibration area of the latent image by focusing the light from additional LEDs, for example, on parts of the calibration area not occupied by the calibration spots. Alternatively, the additional data may be recorded in one or more of the calibration spots. This can be done by replacing one or more of the LEDs 230, 232 and 234 constituting the light source 240 by an integrated array of small LEDs. The additional information must be coded so that a predetermined number of the LEDs is always ON.

When the invention is used as described above, after an image has been captured to form a latent image in a phosphor film, the latent image can be simply, precisely and automatically reproduced even if a long time has elapsed between the image being captured and the latent image being reproduced.

Although this disclosure describes illustrative embodiments of the invention in detail, it is to be understood that the invention is not limited to the precise embodiments described, and that various modifications may be practiced within the scope of the invention defined by the appended claims.

**Claims**

1. A photography method for a phosphor film, the method comprising forming a latent image in the phosphor film by:

    exposing the phosphor film (220) to light (202) from a subject to form an image area (403) of the latent image (401); and
    simultaneously exposing the phosphor film to light (242) of an energy that produces a known saturation level to form a calibration area (405) of the latent image.

2. The photography method of claim 1, in which, in simultaneously exposing the phosphor film to light, the phosphor film is exposed to light of different colors (e.g., 280, 282, 284), the light of each of the different colors producing a known level of saturation in separate calibration spots (e.g., 407, 409, 411) in the calibration area.

3. The photography method of claim 1 or 2, in which the light (242) that exposes the calibration area of the latent image is of an energy that fully saturates the phosphor film.

4. The photography method of claim 1, 2 or 3, additionally comprising:

illuminating the latent image with infra-red light (651) to stimulate the latent image (401) to emit light;
generating a frame of image data (659) in response to the light emitted by the latent image, the frame of image data including:

a calibration data set (663) representing the light emitted by the calibration area, and
an image data set (661) representing the light emitted by the image area; and

correcting the image data set for spontaneous electron return using a calibration factor derived from the calibration data set to generate a frame of corrected image data (671).

5. The photography method of claim 4, in which correcting the image data set includes:

providing an initial light output value ($E_P(O)$) representing a light energy that would be emitted by the calibration area (405) if the latent image were illuminated with infra-red light immediately after exposure to the incident light;
dividing the initial light output value by a light output value ($E_P(t)$) derived from the calibration data set to generate the calibration factor; and
multiplying (669) the image data (e.g., $E_S(t)_i$) by the calibration factor to generate respective corrected image data (e.g., $E_S(O)_i$).

6. A method of reproducing a latent image (401) stored in a phosphor film (220), the latent image including an image area (403) exposed to incident light (202) from a subject, and a calibration area (405) exposed to light (242) of an energy that produces a known saturation level in the phosphor film, the method comprising:

stimulating the latent image (401) to emit light;
generating a frame of image data (659) in response to the light emitted by the latent image, the frame of image data including:

a calibration data set (663) representing the light emitted by the calibration area, and
an image data set (661) representing the light emitted by the image area;

generating (667) a calibration factor from the calibration data set; and
correcting (669) the image data set for spontaneous electron return using the calibration factor to generate a frame of corrected image data (671).

7. The latent image reproducing method of claim 6, in which:

generating the calibration factor includes:

providing an initial light output value ($E_P(O)$) representing a light energy that would be emitted by the calibration area (405) if the latent image were stimulated to emit light immediately after exposure to the incident light, and
dividing the initial light output value by a light output value ($E_P(t)$) derived from the calibration data set (663) to generate the calibration factor; and

correcting the image data set includes multiplying the image data (e.g., $E_S(t)_i$) in the image date set by the calibration factor to generate respective corrected image data (e.g., $E_S(O)_i$).

8. The latent image reproducing method of claim 6, in which:

the image data set (661) includes a color data subset for each of plural colors; and
in correcting the image data set, the image data in each of the color data subsets are all corrected using the calibration factor.

9. The latent image reproducing method of claim 6, in which:

the calibration area (405) of the phosphor film (202) is exposed to light of different colors (e. g., 280, 282, 284), the light of each of the different colors producing a known level of saturation in calibration spots (e.g., 407, 409, 411) in the calibration area;
in generating the frame of image data (659):

the calibration data set (663) comprises a color calibration data subset for each of the different colors, and
the image data set (661) comprises a color data subset corresponding to each of the different colors;

in generating the calibration factor, a calibration factor is generated from each of the color calibration data subsets; and
in correcting the image data set, the image data set is corrected by correcting the image data in each color data subset using the calibration factor derived from the corresponding color calibration data subset.

10. The latent image reproducing method of claim 9, in which:

generating the calibration factor includes:

providing an initial light output value ($E_P(O)$) for each color, the initial light value representing a light energy that would be emitted by each of the calibration spots if the latent image were stimulated to emit light immediately after exposure to the incident light, and

dividing the initial light output value for each color by a light output value ($E_P(t)$) derived from the color calibration data subset for the color to generate the calibration factor for the color; and

correcting the image data set includes multiplying the image data (e.g., $E_S(t)_i$) in each color data subset by the calibration factor for the color to generate respective corrected image data (e.g., $E_S(O)_i$).

11. A camera (200) that captures images using a phosphor film, the camera comprising:

a camera body (250);

a phosphor film (220) mounted in the camera body;

a shutter (205) mounted in the camera body, the shutter being operable to admit light to the phosphor film, the light forming in the phosphor film an image area (403) of a latent image (401); and

a light source (240) mounted in the camera body so that light from the light source falls on the phosphor film, the light source operating simultaneously with the shutter to expose the phosphor film to light of an energy that produces a known saturation level in a calibration area (405) of the latent image.

12. The camera of claim 11, in which the light source (240) includes plural light sources (e.g., 230, 232, 234) each generating light of a different color, the plural light sources being mounted in the camera body so that the light from each of the plural light sources exposes the phosphor film in an individual calibration spot (e.g., 407, 409, 411) in the calibration area of the latent image.

FIG.1

FIG.2

FIG.3

FIG.4

FROM MAIN SHUTTER

541

CONTROLLER 533

531

543

FILM SPEED (OPTIONAL)

240

535 537 539

230 232 234

500

FIG.5

655

659

600

657

220

653

651

405

403

401

FIG.6

661 IMAGE DATA FRAME 659

663

CALIBRATION DATA SEPARATOR 665

IMAGE DATA

669 ✕

CORRECTED IMAGE DATA FRAME

671

CALIBRATION DATA

$E_p(0)$

667 CALIBRATION FACTOR CALCULATOR

CALIBRATION FACTOR

700

FIG.7

## EUROPEAN SEARCH REPORT

**European Patent Office**

**Application Number**

EP 97 30 3527

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP 0 712 035 A (HEWLETT PACKARD CO) 15 May 1996<br>* the whole document *<br>--- | 1,3-7,11 | G03C1/705<br>G03B17/24 |
| Y | US 4 922 100 A (TAKEUCHI MIKIO) 1 May 1990<br>* column 2, line 24 - line 27 *<br>* column 7, line 60 - column 8, line 8 *<br>* claims 2,15,19-22 *<br>* column 2, line 61 - line 68 *<br>--- | 1,3-7,11 | |
| Y | US 4 193 676 A (KURAMOTO YOSHIO ET AL) 18 March 1980<br>* abstract *<br>* column 2, line 67 - column 3, line 34 *<br>--- | 11 | |
| A | WO 86 00723 A (SUGIMOTO HARUE) 30 January 1986<br>----- | 1,11 | |
| | | | **TECHNICAL FIELDS SEARCHED** (Int.Cl.6)<br><br>G03C<br>G03B |

The present search report has been drawn up for all claims

| Place of search | Date of completion of the search | Examiner |
|---|---|---|
| THE HAGUE | 15 September 1997 | Bolger, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)